# EUROPÄISCHE PATENTSCHRIFT

(11) **EP 3 911 526 B1**
(45) Veröffentlichungstag und Bekanntmachung des Hinweises auf die Patenterteilung: **05.07.2023**
(21) Anmeldenummer: 20700354.2
(22) Anmeldetag: 08.01.2020
(51) Int. Cl.: B60C 23/04

(54) **SYSTEM ZUR REIFENDRUCKÜBERWACHUNG**
SYSTEM FOR MONITORING TYRE PRESSURE
SYSTÈME DE SURVEILLANCE DE PRESSION DE PNEUMATIQUE

(30) Priorität: 14.01.2019 DE 102019100825; 05.03.2019 DE 102019105512
(43) Veröffentlichungstag der Anmeldung: 24.11.2021
(73) Patentinhaber: Huf Baolong Electronics Bretten GmbH, 75015 Bretten (DE)
(72) Erfinder: GAMER, Benedikt, 75045 Walzbachtal (DE); ARNOLDO, Sven, 76316 Malsch (DE); SEIFERT, Andre, 75181 Pforzheim (DE); TREIT, Alexander, 74858 Aglasterhausen (DE)
(74) Vertreter: Twelmeier Mommer & Partner
(86) Internationale Anmeldenummer: PCT/EP2020/050308
(87) Internationale Veröffentlichungsnummer: WO 2020/148126

(56) Entgegenhaltungen:
- WO-A1-2017/216008
- CN-Y- 2 837 123
- DE-U1-202007 009 443
- JP-A- 2014 113 854

## Beschreibung

Die Erfindung betrifft ein System zur Reifendrucküberwachung mit einem Reifenventil zur Anordnung an einer Felge eines Fahrzeugs gemäß den Merkmalen des Oberbegriffs des Anspruchs 1. Ein System mit den im Oberbegriff des Anspruchs genannten Merkmalen ist aus WO 2017/216008 A1 bekannt.

### Zu einem derartigen Reifendruckkontrollsystem gehört eine

Reifendrucküberwachungseinheit, die in einem Gehäuse einen Drucksensor und eine Sendeeinrichtung enthält. Das Gehäuse der Reifendrucküberwachungseinheit wird an einem Reifenventil eines luftbereiften Rades befestigt, so dass das Gehäuse, insbesondere zwei an der Unterseite des Gehäuses angeordnete Fußelemente, auf dem Felgenbett aufsitzt oder die Reifendrucküberwachungseinheit soweit weit wie möglich an das Felgenbett verschiebbar ist.

Bei bekannten Reifendruckkontrollsystemen, wie beispielsweise in der EP1277601A2 beschrieben, wird bei deren Befestigung an die Radfelge zuerst der Winkel zwischen dem Gehäuse der Reifendrucküberwachungseinheit und dem Ventil bestimmt und dann die Einheit Gehäuse-Ventil an die Radfelge montiert. Hierbei wird eine Überwurfmutter mit einem integrierten Ring, der erst ab einer bestimmten Kraft bricht, verwendet. Dabei kann es passieren, dass der Winkel zwischen dem Gehäuse und dem Ventil vom Monteur falsch eingestellt wird. Die möglichen Folgen sind einerseits Spannungen im Gehäuse, die aufgrund der wirkenden mechanischen Belastungen durch ein Verkanten der Komponenten beim Festziehen der Überwurfmutter entstehen und bis zum Brechen des Gehäuses führen können. Andererseits kann es passieren, dass ein Dichtungsring nicht vollständig auf der Radfelgeninnenseite aufliegt, da die Achsen von Ventilloch und Ventil nicht koaxial laufen. Dadurch kann eine optimale Verpressung des Dichtungsrings nicht gewährleistet werden, was zu einer so genannten Leckage führen kann. Um den Effekt des Kippens während der Montage zu verhindern, wurden bisher Arbeitsanweisungen für Monteure erarbeitet.

Ferner ist es wichtig, dass die Radelektronik mit dem dazugehörenden Reifenventil des Reifendruckkontrollsystems möglichst universell verwendbar ist. Bei der Montage kann die Reifendrucküberwachungseinheit auf dem Ventilfuß in Richtung des Felgenbetts verschwenkt werden, so dass die Reifendrucküberwachungseinheit unabhängig von dem Felgenbettniveau, d. h. der Lage der Ventilbohrung relativ zu dem Felgenbett, im montierten Zustand stets mit ihren Fußelementen auf dem Felgenbett aufsitzen kann. Das bekannte Reifendruckkontrollsystem ermöglicht auf diese Weise eine Anpassung an die geometrischen Verhältnisse einer gegebenen Felge.

Aufgabe der Erfindung ist es deshalb, einen Weg aufzuzeigen, wie mit geringerem Aufwand und Kosten ein Reifendruckkontrollsystem geschaffen werden kann, dass für unterschiedliche Felgengeometrien verwendet werden kann, wobei ein Verkanten der Komponenten beim Befestigen der Überwurfmutter vermieden und eine stabile Auflage der Reifendrucküberwachungseinheit auf dem Felgenbett ermöglicht wird.

Die erfindungsgemäße Aufgabe wird gelöst durch sämtliche Merkmale und Details des unabhängigen Systemanspruchs 1 sowie ein Verfahren mit den Merkmalen des Anspruchs 12. In den abhängigen Ansprüchen sind vorteilhafte und besonders zweckmäßige Ausgestaltungen der Erfindung angegeben.

Im Folgenden werden die Begriffe "Vormontagestellung" und "Endmontagestellung" definiert. Bei einer Vormontagestellung wird das Reifenventil bereits mit einer vormontierten Reifendrucküberwachungseinheit an einer Felge befestigt, wobei die Reifendrucküberwachungseinheit bereits auf dem Reifenventilfuß aufgeschoben ist und das Befestigungselement mindestens eine Rastausnehmung des Haltemittels überschritten hat.

Bei einer Endmontagestellung ist das Reifenventil bereits an einer Felge montiert, wobei die Reifendrucküberwachungseinheit soweit in Richtung des Felgenbetts bewegt wurde, dass das Gehäuse der Reifendrucküberwachungseinheit bereits das Felgenbett berührt oder möglichst nah am Felgenbett angeordnet ist.

Bei einem erfindungsgemäßen System zur Reifendrucküberwachung sind das Haltemittel und das Befestigungselement derart ausgebildet, dass eine Bewegung der Reifendrucküberwachungseinheit am Reifenventilfuß nur in eine Richtung, insbesondere in Richtung eines Felgenbetts, möglich ist.

Der wesentliche Vorteil dieses erfindungsgemäßen Systems, dass eine Anpassung an eine gegebene Felgengeometrie während der Montage durch eine Verschiebung der Reifendrucküberwachungseinheit auf dem Ventilfuß vorgenommen werden kann. Unabhängig von einem Felgenbettniveau einer gegebenen Felge kann so erreicht werden, dass das Gehäuse der Reifendrucküberwachungseinheit auf dem Felgenbett aufsitzt. Ferner ist die Befestigung des Reifenventils an der Felge und die Befestigung der Reifendrucküberwachungseinheit am Reifenventil voneinander entkoppelt bzw. die Befestigung des Reifenventils erfolgt bevor die Reifendrucküberwachungseinheit auf dem Ventilfuß in Richtung des Felgenbetts bewegt wird, was ein Verkanten der Komponenten beim Befestigen des Reifenventils an der Felge mit der Überwurfmutter ausschließt. Durch eine einteilige oder materialeinheitliche Ausbildung des Befestigungselements mit dem Gehäuse und durch Vorsehen eines Haltemittels auf dem Reifenventilfuß, welches eine Bewegung nur in eine Richtung zulässt und zwar in Richtung des Felgenbetts, wird eine werkzeuglose Positionierung der Reifendrucküberwachungseinheit auf dem Ventilfuß bei geringen Kosten und erhöhtem Komfort für einen Benutzer geschaffen.

Vorteilhafterweise kann eine Bewegung vom Felgenbett entgegengesetzte Richtung vom Befestigungselement blockierbar sein. Auf diese Weise lässt sich eine besonders sichere Fixierung der Reifendrucküberwachungseinheit auf dem Ventilfuß verwirklichen, wenn die Reifendrucküberwachungseinheit auf dem Felgenbett aufliegt.

Erfindungsgemäß ist vorgesehen sein, dass das Befestigungselement als elastischer Hebelarm ausgebildet ist. Ein Ende des Hebelarms ist an dem Gehäuse der Reifendrucküberwachungseinheit befestigt, während ein anderes Ende frei ist, wobei an dem freien Ende eine Rastnase vorgesehen ist, welche eine Anlaufschräge aufweist. Die Anlaufschräge sorgt dafür, dass der Hebelarm vom dem Haltemittel beim Verschieben des Gehäuses in Richtung des Felgenbetts auslenkbar ist. Ferner ist die Rastnase derart ausgebildet, dass eine Bewegung in die von dem Felgenbett entgegengesetzte Richtung durch das Haltemittel blockierbar ist.

Der Hebelarm erstreckt sich im Wesentlichen orthogonal zur Mittelachse des Reifenventils. Dadurch wird ermöglicht, dass die Bewegung der Reifendrucküberwachungseinheit in Richtung des Felgenbetts erfolgt.

Sehr kostengünstig und einfach ist die Konstruktion, wenn der Hebelarm als ein Metalleinleger ausgebildet ist. Die Befestigung des Metaleinlegers im Gehäuse kann stoffschlüssig, insbesondere durch ein Kunststoff-Umspritzverfahren, erfolgen. Auch eine kraft-oder formschlüssige Verbindung des Metaleinlegers im Gehäuse ist denkbar.

Eine die Erfindung verbessernde Maßnahme sieht vor, dass der Reifenventilfuß im Wesentlichen eine quaderförmige Form mit einer Stirnfläche und Seitenflächen ausweist, wobei die Führung an mindestens einer vertikalen Seitenfläche ausgebildet ist. Weiterhin kann gemäß der Erfindung vorgesehen sein, dass der Reifenventilfuß eine Führung, insbesondre in Form einer Nut oder einer Führungsrippe, aufweist.

Der Reifenventilfuß ist zum Einstecken in eine komplementäre Aufnahme der Reifendrucküberwachungseinheit vorgesehen. Dies hat den Vorteil, dass die Reifendrucküberwachungseinheit dadurch verdrehsicher am Reifenventil aufgenommen ist. Ferner wird durch die Führung eine Bewegung der Reifendrucküberwachungseinheit in axialer Richtung einer Mittelachse des Reifenventils blockiert, so dass die Bewegung nur in Richtung des Felgenbetts erfolgen kann.

Weiterhin kann gemäß der Erfindung vorgesehen sein, dass das Haltemittel auf der Stirnfläche ausgebildet ist. Das Haltemittel sorgt dafür, dass eine Bewegung der Reifendrucküberwachungseinheit vom Felgenbett entgegengesetzte Richtung blockiert wird.

Vorteilhafterweise kann das Haltemittel in Form von mindestens zwei in einer Reihe angeordneten Rastausnehmungen ausgebildet sein. Dabei können die Rastausnehmungen sich horizontal auf der Stirnfläche erstrecken. Dies weist den Vorteil auf, dass mehrere Positionen der Reifendrucküberwachungseinheit auf dem Reifenventil in Abhängigkeit vom Felgenniveau eingestellt werden können.

Sehr kostengünstig und einfach ist die Konstruktion, wenn das Gehäuse aus einem Thermoplast, insbesondere aus einem mit mindestens 25 Prozent Glasfasern verstärkten Polybutylenterephthalat, hergestellt ist.

Eine die Erfindung verbessernde Maßnahme sieht vor, dass der Hebelarm des Befestigungselements aus dem Gehäuse hervorsteht, so dass eine Löselasche gebildet wird. Dadurch wird die Demontage der Reifendrucküberwachungseinheit erheblich erleichtert und der Komfort für einen Benutzer gesteigert, da die Demontage ohne weiteres Werkzeug erfolgen kann.

Ein erfindungsgemäßes System zur Reifenüberwachung kann an einer Felge mit folgenden Schritten montiert werden:
a) Einführen eines Reifenventils mit vormontierter Reifendrucküberwachungseinheit in eine Felgenbohrung,
b) Befestigen des Reifenventils mittels einer Überwurfmutter an der Felge ,
c) Einstecken der Reifendrucküberwachungseinheit derart in einen Aufnahmeraum, dass eine Vormontagestellung eingenommen wird,
d) Überführen der Reifendrucküberwachungseinheit von einer Vormontagestellung in eine Endmontagestellung von einem Benutzer durch ein Betätigen am Gehäuse der Reifendrucküberwachungseinheit, wobei die Bewegung der Reifendrucküberwachungseinheit am Reifenventil von der Vormontagestellung in die Endmontagestellung translatorisch und/oder rotatorisch erfolgt.

Bei der translatorischen Bewegung der Reifendrucküberwachungseinheit am Reifenventil ist die Führung als vertikale und gerade Führungsrippe bzw. Als vertikale und gerade Führungsnut ausgebildet. Die Stirnfläche des Reifenventilfußes weist somit eine gerade Fläche auf, was eine kostengünstige Fertigung des Reifenventils mit sich bringt. Bei der rotatorischen Bewegung der Reifendrucküberwachungseinheit am Reifenventil ist die Führung als eine bogenförmige Führungsrippe bzw. als eine bogenförmige Führungsnut ausgebildet. Damit kann ein Abstand bzw. Winkel zwischen dem Felgenbett und der Reifendrucküberwachungseinheit vergrößert werden, was ein Verkanten der Reifendrucküberwachungseinheit an der Felge beim Befestigen des Reifenventils reduziert.

Weitere Maßnahmen und Vorteile sowie technische Merkmale der Erfindung ergeben sich aus den Ansprüchen, der nachfolgenden Beschreibung und den Zeichnungen. Dabei können unterschiedliche Merkmale für sich alleine und in einer beliebigen Kombination vorteilhaft sein, ohne den Rahmen der Erfindung zu verlassen. Weitere Einzelheiten, Merkmale und Vorteile des Gegenstandes der Erfindung ergeben sich aus der nachfolgenden Beschreibung im Zusammenhang mit der Zeichnung, in der beispielhafte bevorzugte Ausführungsbeispiele der Erfindung dargestellt sind. In der Zeichnung zeigt:
Figur 1 eine Explosionsdarstellung eines Systems zur Reifendrucküberwachung gemäß einer ersten Ausführungsform,
Figur 2 eine seitliche Darstellung des Systems zur Reifendrucküberwachung in einer Vormontagestellung gemäß der ersten Ausführungsform,
Figur 3 eine seitliche Darstellung des Systems zur Reifendrucküberwachung in einer Endmontagestellung gemäß der ersten Ausführungsform,
Figur 4 eine perspektivische Darstellung des Systems zur Reifendrucküberwachung gemäß der ersten Ausführungsform,
Figur 5 eine perspektivische Darstellung des Systems zur Reifendrucküberwachung mit einer Löselasche gemäß der ersten Ausführungsform,
Figur 6 eine Explosionsdarstellung eines Systems zur Reifendrucküberwachung gemäß einer zweiten Ausführungsform,
Figur 7 eine seitliche Darstellung des Systems zur Reifendrucküberwachung in einer Vormontagestellung gemäß der zweiten Ausführungsform,
Figur 8 eine seitliche Darstellung des Systems zur Reifendrucküberwachung in einer Endmontagestellung gemäß der zweiten Ausführungsform,
Figur 9 eine perspektivische Darstellung des Systems zur Reifendrucküberwachung gemäß zweiten Ausführungsform,

In den nachfolgenden Figuren werden für die gleichen technischen Merkmale auch von unterschiedlichen Ausführungsbeispielen die identischen Bezugszeichen verwendet.

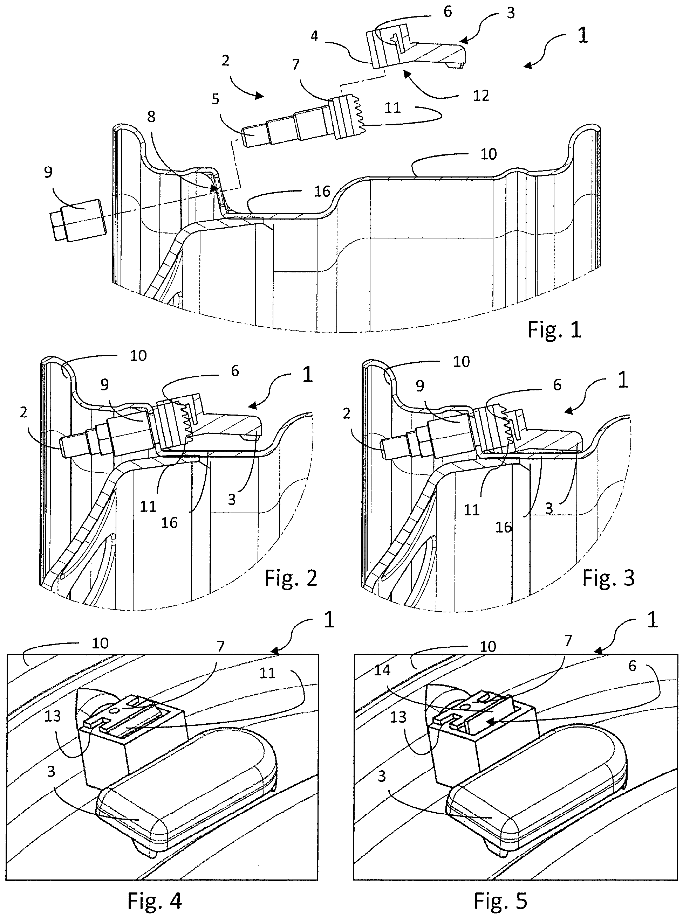

Figur 1 eine Explosionsdarstellung eines Systems zur Reifendrucküberwachung 1 gemäß einer ersten Ausführungsform. Das System zur Reifendrucküberwachung 1 ist an einer Felgenbohrung 8 einer Felge 10 montierbar. Das System zur Reifendrucküberwachung 1 weist ein Reifenventil 2 und eine Reifendrucküberwachungseinheit 3, die zur Anordnung an dem Reifenventil 2 vorgesehen ist, sowie eine Überwurfmutter 9 zur Befestigung des Reifenventils an der Felge 10 auf. Die Reifendrucküberwachungseinheit 3 hat ein Gehäuse 4 aus Kunststoff, welches aus einem Thermoplast, insbesondere aus einem mit mindestens 25 Prozent Glasfasern verstärkten Polybutylenterephthalat, hergestellt sein kann, in dem ein nicht gezeigter Drucksensor und eine Sendeeinrichtung angeordnet sind. Von der Reifendrucküberwachungseinheit 3 gesendete Druckmesswerte können mit einer geeigneten Empfangseinrichtung empfangen und ausgewertet werden, so dass dem Fahrer eines Fahrzeugs ein Druckabfall signalisiert werden kann. Das Gehäuse 4 ist mit einem Aufnahmeraum 12 für das Reifenventil 2 ausgebildet, wobei innerhalb des Aufnahmeraums 12 ein mit dem Gehäuse 4 einteilig und/oder materialeinheitlich ausgeformtes Befestigungselement 6 vorgesehen ist. Das Befestigungselement 6 ist als elastischer Hebelarm ausgebildet. Dabei erstreckt sich der Hebelarm im Wesentlichen orthogonal zur Mittelachse des Reifenventils. Am äußeren Ende des Hebelarmes ist eine Rastnase vorgesehen, wobei die Rastnase mit einer Anlaufschräge ausgebildet ist. Ferner kann der Hebelarm als Metaleinleger ausgebildet sein. Die Befestigung des Metaleinlegers im Gehäuse 4 kann stoffschlüssig, insbesondere durch ein Kunststoff-Umspritzverfahren, erfolgen. Auch eine kraft-oder formschlüssige Verbindung des Metaleinlegers im Gehäuse 4 ist denkbar. Das Reifenventil 2 ist mit einem Reifenventilfuß 7 und einem Reifenventilschaft 5 aus Metall ausgebildet, wobei am Reifenventilfuß 7 mindestens ein Haltemittel 11 zum Zusammenwirken mit dem Befestigungselement 6 vorgesehen ist und der Reifenventilschaft 5 mit einem Gewinde für die Überwurfmutter 9 zur Befestigung des Reifenventils 2 an der Felge 10. Ferner kann der Reifenventilfuß 5 im Wesentlichen eine Quaderform mit einer Stirnfläche und Seitenflächen aufweist, wobei eine Führung 13 an mindestens einer Seitenfläche ausgebildet ist, wie in Figur 4 gezeigt. Dabei ist die Führung 13 in Form einer Führungsnut oder Führungsrippe 15 vorgesehen. Im Gehäuse 4 kann eine komplementäre Führungsnut oder Führungsrippe 15 angeordnet sein. Das Haltemittel 11 kann auf der Stirnfläche angeordnet sein. Dabei weist das Haltemittel 11 mindestens zwei in einer Reihe angeordnete Rastausnehmungen auf, die sich im Wesentlichen horizontal auf der Stirnfläche erstecken.

Figur 2 zeigt eine seitliche Darstellung des Systems zur Reifendrucküberwachung 1 in einer Vormontagestellung gemäß der ersten Ausführungsform und in Figur 3 ist eine seitliche Darstellung des Systems zur Reifendrucküberwachung in einer Endmontagestellung gemäß der ersten Ausführungsform gezeigt.

Die Reifendrucküberwachungseinheit 3 weist eine Vormontagestellung und eine Endmontagestellung auf, wobei die Reifendrucküberwachungseinheit 3 von einem Benutzer durch ein Betätigen am Gehäuse 4 der Reifendrucküberwachungseinheit 3 von der Vormontagestellung in die Endmontagestellung überführbar ist. Dabei ist die Reifendrucküberwachungseinheit 3 translatorisch von der Vormontagestellung in die Endmontagestellung am Reifenventil 2 bewegbar. Bei dem gezeigten Ausführungsbeispiel erlaubt das Befestigungselements 6 durch die Anlaufschräge der Rastnase und die Elastizität des Hebelarms eine Bewegung der Reifendrucküberwachungseinheit 3 auf dem Reifenventilfuß 7 nur in Richtung eines Felgenbetts 16. Dabei gleitet das Befestigungselements 6 nacheinander in die Rastausnehmungen des Haltemittels 11 hinein, wenn das Gehäuse 4 der Reifendrucküberwachungseinheit 3 durch eine äußere Kraft betätigt wird. Eine Bewegung vom Felgenbett 16 entgegengesetzte Richtung wird das Gehäuse 4 vom Befestigungselement 6 blockiert. Ferner ist die Befestigung des Reifenventils 2 an der Felge 10 und die Befestigung der Reifendrucküberwachungseinheit 3 am Reifenventil 2 ist voneinander entkoppelt. Zur Ausrichtung des Reifenventils 2 an der Felge 10 kann ein nicht gezeigter Verdrehschutz vorgesehen sein, z. B. in Form mindestens einer Schlüsselfläche am Reifenventil 2, welche mit mindestens einer komplementären Fläche der Felge 10 zusammenwirkt.

Um das gezeigte Systems zur Reifedrucküberwachung 1 an einer Felge 10 zu montieren wird ein Reifenventils 2 mit vormontierter Reifendrucküberwachungseinheit 3 in eine Felgenbohrung 8 einführt. Danach wird das Reifenventil 2 mittels einer Überwurfmutter 9 an der Felge 10 befestigt. Anschließend wird die Reifendrucküberwachungseinheit 3 von einer Vormontagestellung in eine Endmontagestellung von einem Benutzer durch ein Betätigen am Gehäuse 4 der Reifendrucküberwachungseinheit 3 überführt.

In Figur 5 ist eine perspektivische Darstellung des Systems zur Reifendrucküberwachung mit einer Löselasche 14 gemäß der ersten Ausführungsform gezeigt. Um die Reifendrucküberwachungseinheit 3 vom Reifenventil 2 zu demontieren kann das Befestigungselement 6 derart verlängert werden, dass der Hebelarm des Befestigungselements 6 aus dem Gehäuse 4 hervorsteht, so dass eine Löselasche 14 gebildet wird, welche vom Benutzer ohne weiteres Werkzeug betätigbar ist. Dabei wird der elastisch gelagerte Hebelarm des Befestigungselements 6 in die vom Reifenventil 2 wegweisende Richtung gezogen, so dass die Verbindung zwischen dem Gehäuse 4 und dem Reifenventil 2 lösbar ist. Alternativ kann die Demontage ohne Löselasche 14 erfolgen, wie in Figur 4 gezeigt, indem das Reifenventil 2 von der Felge 10 abgeschraubt wird und die Reifendrucküberwachungseinheit 3 entlang der Stirnfläche des Reifenventils 2 nach unten bewegt wird.

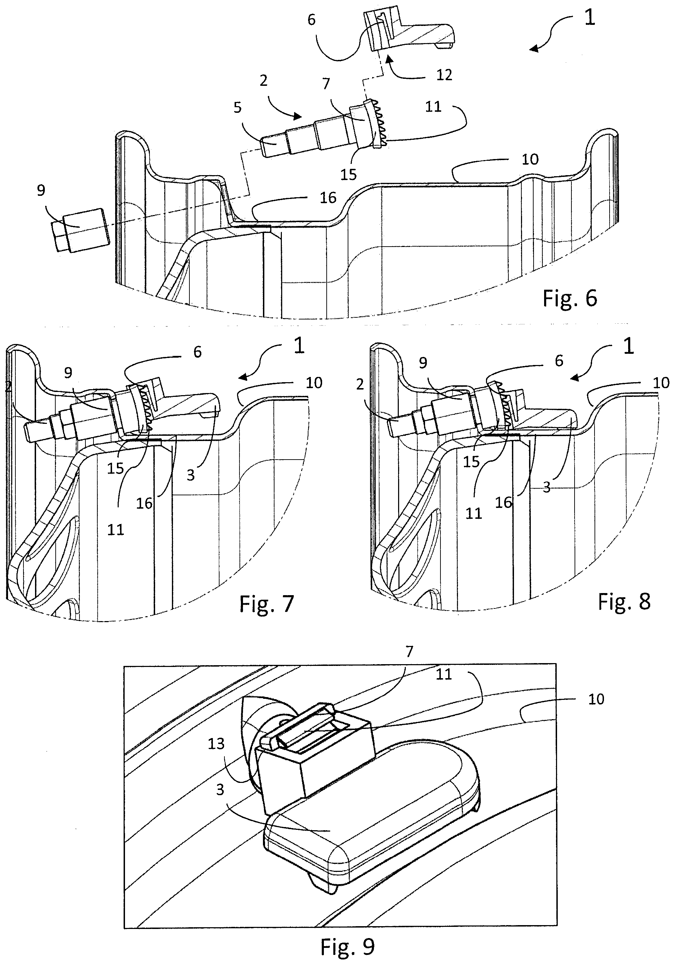

Figur 6 eine Explosionsdarstellung eines Systems zur Reifendrucküberwachung 1 gemäß einer zweiten Ausführungsform. Das System zur Reifendrucküberwachung ist an einer Felgenbohrung 8 einer Felge 10 montierbar. Das System zur Reifendrucküberwachung 1 weist ein Reifenventil 2 und eine Reifendrucküberwachungseinheit 3, die zur Anordnung an dem Reifenventil 2 vorgesehen ist, sowie eine Überwurfmutter 9 zur Befestigung des Reifenventils an der Felge 10 auf. Die Reifendrucküberwachungseinheit 3 hat ein Gehäuse 4 aus Kunststoff, welches aus einem Thermoplast, insbesondere aus einem mit mindestens 25 Prozent Glasfasern verstärkten Polybutylenterephthalat, hergestellt sein kann, in dem ein nicht gezeigter Drucksensor und eine Sendeeinrichtung angeordnet sind. Von der Reifendrucküberwachungseinheit 3 gesendete Druckmesswerte können mit einer geeigneten Empfangseinrichtung empfangen und ausgewertet werden, so dass dem Fahrer eines Fahrzeugs eine Druckänderung signalisiert werden kann. Das Gehäuse 4 ist mit einem Aufnahmeraum 12 für das Reifenventil ausgebildet, wobei innerhalb des Aufnahmeraums 12 ein mit dem Gehäuse 4 einteilig und/oder materialeinheitlich ausgeformtes Befestigungselement 6 vorgesehen ist. Das Befestigungselement 6 ist als elastischer Hebelarm ausgebildet. Dabei erstreckt sich der Hebelarm im Wesentlichen orthogonal zur Mittelachse des Reifenventils. Am äußeren Ende des Hebelarmes ist eine Rastnase vorgesehen. Das Reifenventil 2 ist mit einem Reifenventilfuß 7 und einem Reifenventilschaft 5 aus Metall ausgebildet, wobei am Reifenventilfuß 7 mindestens ein Haltemittel 11 zum Zusammenwirken mit dem Befestigungselement 6 vorgesehen ist und der Reifenventilschaft 5 mit einem Gewinde für die Überwurfmutter zur Befestigung des Reifenventils 2 an der Felge 10. Ferner kann der Reifenventilfuß 5 im Wesentlichen eine Quaderform mit einer Stirnfläche und Seitenflächen aufweisen, wobei eine Führung 13 an mindestens einer vertikalen Seitenfläche ausgebildet ist, wie in Figur 9 gezeigt. Die Stirnfläche ist anders als im ersten Ausführungsbeispiel als abgerundete Fläche vorgesehen, die orthogonal zur Mittelachse des Reifenventils erstreckt. Ferner ist die Führung 13 in Form einer bogenförmigen Führungsnut oder bogenförmigen Führungsrippe vorgesehen. Im Gehäuse 4 kann eine komplementäre Führungsnut oder Führungsrippe 15 angeordnet sein. Das Haltemittel 11 kann auf der Stirnfläche angeordnet sein. Dabei weist das Haltemittel 11 mindestens zwei in einer Reihe angeordnete Rastausnehmungen auf, die sich im Wesentlichen horizontal auf der Stirnfläche erstecken.

Figur 7 zeigt eine seitliche Darstellung des Systems zur Reifendrucküberwachung 1 in einer Vormontagestellung gemäß der ersten Ausführungsform und in Figur 8 ist eine seitliche Darstellung des Systems zur Reifendrucküberwachung in einer Endmontagestellung gemäß der ersten Ausführungsform gezeigt.

Die Reifendrucküberwachungseinheit 3 weist eine Vormontagestellung und eine Endmontagestellung auf, wobei die Reifendrucküberwachungseinheit 3 von einem Benutzer durch ein Betätigen am Gehäuse 4 der Reifendrucküberwachungseinheit 3 von der Vormontagestellung in die Endmontagestellung überführbar ist. Dabei ist die Reifendrucküberwachungseinheit 3 bogenförmig bzw. rotatorisch von der Vormontagestellung in die Endmontagestellung am Reifenventil 2 bewegbar.

Bei dem gezeigten Ausführungsbeispiel erlaubt das Befestigungselements 6 durch die Anlaufschräge der Rastnase und die Elastizität des Hebelarms eine Bewegung der Reifendrucküberwachungseinheit 3 auf dem Reifenventilfuß 7 nur in Richtung eines Felgenbetts 16. Dabei gleitet das Befestigungselements 6 nacheinander in die Rastausnehmungen des Haltemittels 11 hinein, wenn das Gehäuse 4 der Reifendrucküberwachungseinheit 3 durch eine äußere Kraft betätigt wird. Eine Bewegung des Reifendrucküberwachungseinheit 3 in die vom Felgenbett 16 entgegengesetzte Richtung wird durch das Einrasten des Befestigungselements 6 im Haltemittel 11 blockiert. Ferner ist die Befestigung des Reifenventils 2 an der Felge 10 und die Befestigung der Reifendrucküberwachungseinheit 3 am Reifenventil 2 voneinander entkoppelt. Zur Ausrichtung des Reifenventils 2 an der Felge 10 kann ein nicht gezeigter Verdrehschutz vorgesehen sein, z. B. in Form mindestens einer Schlüsselfläche am Reifenventil 2, welche mit einer komplementären Fläche der Felge 10 zusammenwirkt.

Um das gezeigte Systems zur Reifedrucküberwachung 1 an einer Felge 10 zu montieren wird ein Reifenventil 2 mit vormontierter Reifendrucküberwachungseinheit 3 in eine Felgenbohrung 8 einführt. Danach wird das Reifenventil 2 mittels einer Überwurfmutter 9 an der Felge 10 befestigt. Anschließend wird die Reifendrucküberwachungseinheit 3 von einer Vormontagestellung in eine Endmontagestellung von einem Benutzer durch ein Betätigen am Gehäuse 4 der Reifendrucküberwachungseinheit 3 überführt.

Die Demontage erfolgt auf dieselbe Art und Weise wie in dem ersten Ausführungsbeispiel. Ferner kann das Befestigungselement 6 derart verlängert werden, dass der Hebelarm des Befestigungselements 6 aus dem Gehäuse 4 hervorsteht, so dass eine Löselasche 14 gebildet wird, welche vom Benutzer ohne weiteres Werkzeug betätigbar ist. Dabei wird der elastisch gelagerte Hebelarm des Befestigungselements 6 in die vom Reifenventil 2 wegweisende Richtung gezogen, so dass die Verbindung zwischen dem Gehäuse 4 und dem Reifenventil 2 lösbar ist.

Die vorstehend beschriebene Erfindung ist selbstverständlich nicht auf die beschriebenen und dargestellten Ausführungsformen beschränkt. Es ist ersichtlich, dass an den in der Figur dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird.

### Bezugszeichenliste

- 1: System zur Reifendrucküberwachung
- 2: Reifenventil
- 3: Reifendrucküberwachungseinheit
- 4: Gehäuse
- 5: Reifenventilschaft
- 6: Befestigungselement
- 7: Reifenventilfuß
- 8: Felgenbohrung
- 9: Überwurfmutter
- 10: Felge
- 11: Haltemittel
- 12: Aufnahmeraum
- 13: Führung
- 14: Löselasche
- 15: Führungsrippe
- 16: Felgenbett

## Patentansprüche

1. System zur Reifendrucküberwachung (1) mit einem Reifenventil (2) zur Anordnung an einer Felge eines Fahrzeugs, welches einen Reifenventilschaft (5) und einen Reifenventilfuß (7) aufweist, wobei am Reifenventilfuß (7) ein Haltemittel (11) angeordnet ist und
einer Reifendrucküberwachungseinheit (3) mit einem Gehäuse (4), in dem ein Drucksensor zum Messen des Reifendrucks und ein Sender zum drahtlosen Übertragen von Reifendruckdaten angeordnet sind,
wobei das Reifenventil (2) und das Gehäuse (4) der Reifendrucküberwachungseinheit (3) mittels eines einteilig oder materialeinheitlich mit dem Gehäuse (4) ausgebildeten Befestigungselements (6) befestigbar sind, welches mit dem Haltemittel (11) zusammenwirkt,
wobei das Haltemittel (11) und das Befestigungselement (6) derart ausgebildet sind, dass eine Bewegung der Reifendrucküberwachungseinheit (3) am Reifenventilfuß (7) nur in eine Richtung, insbesondere in Richtung eines Felgenbetts (16), möglich ist, und
das Befestigungselement (6) als elastischer Hebelarm ausgebildet ist,
**dadurch gekennzeichnet, dass** der Hebelarm sich im Wesentlichen orthogonal zur Mittelachse des Reifenventils (2) erstreckt.

2. System nach Anspruch 1, **dadurch gekennzeichnet, dass** eine Bewegung vom Felgenbett (16) entgegengesetzte Richtung vom Befestigungselement (6) blockierbar ist.

3. System nach einem der vorhergehenden Ansprüche, **dadurch gekennzeichnet, dass** der Hebelarm als ein Metalleinleger ausgebildet ist

4. System nach einem der vorhergehenden Ansprüche, **dadurch gekennzeichnet, dass** am Reifenventilfuß (5) Wesentlichen eine quaderförmige Form mit einer Stirnfläche und Seitenflächen ausweist, wobei die Führung (13) an mindestens einer Seitenfläche ausgebildet ist.

5. System nach einem der vorhergehenden Ansprüche, **dadurch gekennzeichnet, dass** das Haltemittel (11) auf der Stirnfläche ausgebildet ist.

6. System nach einem der vorhergehenden Ansprüche, **dadurch gekennzeichnet, dass** das Haltemittel (11) in Form von mindestens zwei in einer Reihe angeordneten Rastausnehmungen ausgebildet ist, die sich ich horizontal auf der Stirnfläche erstecken

7. System nach einem der vorhergehenden Ansprüche, **dadurch gekennzeichnet, dass** der Reifenventilfuß (5) eine Führung (13), insbesondre in Form einer Führungsnut oder einer Führungsrippe, aufweist.

8. System nach einem der vorhergehenden Ansprüche, **dadurch gekennzeichnet, dass** das Gehäuse (4) aus einem Thermoplast, insbesondere aus einem mit mindestens 25 Prozent Glasfasern verstärkten Polybutylenterephthalat, hergestellt ist.

9. System nach einem der vorhergehenden Ansprüche, **dadurch gekennzeichnet, dass** der Hebelarm des Befestigungselements (6) aus dem Gehäuse (4) hervorsteht, so dass eine Löselasche (14) gebildet wird, welche vom Benutzer zur Demontage der Reifendrucküberwachungseinheit (3) ohne weiteres Werkzeug betätigbar ist

## Claims

1. A system for tire pressure monitoring (1) comprising a tire valve (2) for disposition on a wheel rim of a vehicle, said tire valve comprising a tire valve stem (5) and a tire valve base (7), wherein a holding means (11) is disposed on the tire valve base (7), and
a tire pressure monitoring unit (3) comprising a housing (4) in which a pressure sensor for measuring the tire pressure and a transmitter for wireless transmission of tire pressure data are disposed, wherein the tire valve (2) and the housing (4) of the tire pressure monitoring unit (3) are able to be fastened by means of a fastening element (6) which is implemented in one piece with or made of the same material as the housing (4) and which interacts with the holding means (11),
wherein the holding means (11) and the fastening element (6) are implemented such that the tire pressure monitoring unit (3) on the tire valve base (7) can only move in one direction, in particular in the direction of a rim well (16), and
the fastening element (6) is implemented as an elastic lever arm,
**characterized in that** the lever arm extends essentially orthogonally to a central axis of the tire valve (2).

2. The system according to claim 1, **characterized in that** a movement from the rim well (16) in the opposite direction can be blocked by the fastening element (6).

3. The system according to any one of the preceding claims, **characterized in that** the lever arm is implemented as a metal insert.

4. The system according to any one of the preceding claims, **characterized in that** the tire valve base (5) essentially has a cuboid shape with an end face and side faces, wherein the guide (13) is implemented on at least one side face.

5. The system according to any one of the preceding claims, **characterized in that** the holding means (11) is implemented on the end face.

6. The system according to any one of the preceding claims, **characterized in that** the holding means (11) is implemented in the form of at least two latching recesses disposed in a row, which extend horizontally on the end face.

7. The system according to any one of the preceding claims, **characterized in that** the tire valve base (5) comprises a guide (13), in particular in the form of a guide groove or a guide rib.

8. The system according to any one of the preceding claims, **characterized in that** the housing (4) is made from a thermoplastic, in particular from a polybutylene terephthalate reinforced with at least 25 percent glass fibers.

9. The system according to any one of the preceding claims, **characterized in that** the lever arm of the fastening element (6) protrudes from the housing (4) so that a release tab (14) is formed which can be actuated by the user to dismantle the tire pressure monitoring unit (3) without any further tools.

## Revendications

1. Système de surveillance de pression de pneus (1) avec une valve de pneu (2) à disposer sur une jante d'un véhicule, qui présente une tige de valve de pneu (5) et un pied de valve de pneu (7), un moyen de retenue (11) étant disposé sur le pied de valve de pneu (7) et
une unité de surveillance de pression de pneus (3) avec un boîtier (4) dans lequel sont disposés un capteur de pression pour mesurer la pression de pneu et un émetteur pour la transmission sans fil des données de pression de pneus,
la valve de pneu (2) et le boîtier (4) de l'unité de surveillance de pression de pneus (3) pouvant être fixés au moyen d'un élément de fixation (6) formé d'une seule pièce ou d'un seul matériau avec le boîtier (4), lequel coopère avec le moyen de retenue (11),
le moyen de retenue (11) et l'élément de fixation (6) étant conçus de telle sorte qu'un mouvement de l'unité de surveillance de pression de pneus (3) sur le pied de valve de pneu (7) n'est possible que dans une direction, en particulier dans la direction d'un base de jante (16), et
l'élément de fixation (6) est conçu comme un bras de levier élastique, **caractérisé en ce que** le bras de levier s'étend essentiellement orthogonalement à l'axe central de la valve de pneu (2).

2. Système selon la revendication 1, **caractérisé en ce qu'**un mouvement dans la direction opposée à la base de jante (16) peut être bloqué par l'élément de fixation (6) .

3. Système selon l'une des revendications précédentes, **caractérisé en ce que** le bras de levier est un insert métallique.

4. Système selon l'une quelconque des revendications précédentes, **caractérisé en ce que** le pied de valve de pneu (5) présente essentiellement une forme parallélépipédique avec une face frontale et des faces latérales, le guide (13) étant formé sur au moins une face latérale.

5. Système selon l'une quelconque des revendications précédentes, **caractérisé en ce que** le moyen de retenue (11) est formé sur la face frontale.

6. Système selon l'une quelconque des revendications précédentes, **caractérisé en ce que** le moyen de retenue (11) se présente sous la forme d'au moins deux évidements d'encliquetage disposés en ligne, qui s'étendent horizontalement sur la face frontale.

7. Système selon l'une quelconque des revendications précédentes, **caractérisé en ce que** le pied de valve de pneu (5) comporte un guide (13), notamment sous la forme d'une rainure de guidage ou d'une nervure de guidage.

8. Système selon l'une quelconque des revendications précédentes, **caractérisé en ce que** le boîtier (4) est réalisé en une matière thermoplastique, notamment en un polybutylène téréphtalate renforcé par au moins 25% de fibres de verre.

9. Système selon l'une des revendications précédentes, **caractérisé en ce que** le bras de levier de l'élément de fixation (6) fait saillie hors du boîtier (4) de manière à former une patte de dégagement (14) qui peut être actionnée par l'utilisateur pour démonter l'unité de surveillance de pression de pneus (3) sans autre outil.
